# EUROPÄISCHE PATENTSCHRIFT

(11) **EP 3 235 627 B1**
(45) Veröffentlichungstag und Bekanntmachung des Hinweises auf die Patenterteilung: **22.09.2021**
(21) Anmeldenummer: 17167282.7
(22) Anmeldetag: 20.04.2017
(51) Int. Cl.: B29C 65/00, D04H 3/11, B65H 19/10, D04H 1/49, B29C 65/56

(54) **VERFAHREN UND VORRICHTUNG ZUM HERSTELLEN EINER TEXTILEN GESAMTMATERIALBAHN**
TEXTILE OVERALL MATERIAL SHEET AND METHOD AND DEVICE FOR PRODUCING SAME
BANDE DE MATÉRIAU TEXTILE, SON PROCÉDÉ ET SON DISPOSITIF DE FABRICATION

(30) Priorität: 21.04.2016 DE 102016107404
(43) Veröffentlichungstag der Anmeldung: 25.10.2017
(73) Patentinhaber: Ristau, Jens, 01896 Pulsnitz (DE)
(72) Erfinder: Ristau, Jens, 01896 Pulsnitz (DE)
(74) Vertreter: Steiniger, Carmen

(56) Entgegenhaltungen:
- EP-A1- 2 354 289
- EP-A2- 0 195 545
- EP-A2- 2 918 711
- WO-A1-82/02412
- DE-A1- 2 222 086
- DE-A1- 19 739 186
- DE-U1-202011 103 915

## Beschreibung

Die vorliegende Erfindung betrifft ein Verfahren zum Herstellen einer textilen Gesamtmaterialbahn, bei dem eine erste und eine zweite textile Teilmaterialbahn miteinander zu der Gesamtmaterialbahn verbunden werden, indem quer zur Materiallängsrichtung der Teilmaterialbahnen verlaufende Endbereiche der beiden Teilmaterialbahnen miteinander verbunden werden, wobei die Endbereiche der Teilmaterialbahnen in Materialdickenrichtung komplementär zueinander ausgebildet werden und die sich überlappenden Endbereiche durch Vernadeln, Wasserstrahlverfestigung und/oder Luftstrahlverfestigung miteinander verbunden werden. Die Erfindung betrifft ferner eine Vorrichtung zum Herstellen einer textilen Gesamtmaterialbahn, mit wenigstens einer Zuführeinrichtung, mit der eine erste Teilmaterialbahn einer zweiten Teilmaterialbahn zuführbar ist und wenigstens einer Verbindungseinrichtung zum Verbinden von quer zur Materiallängsrichtung der Teilmaterialbahnen verlaufenden Endbereichen der beiden Teilmaterialbahnen, wobei die Vorrichtung wenigstens eine Endbereichsmodifikationseinrichtung aufweist, mit der die Endbereiche der Teilmaterialbahnen in Materialdickenrichtung komplementär zueinander ausbildbar sind, und die Verbindungseinrichtung wenigstens eine Vernadelungseinrichtung, wenigstens eine Wasserstrahlverfestigungseinrichtung und/oder wenigstens eine Luftstrahlverfestigungseinrichtung zum Verbinden der sich überdeckenden, komplementär zueinander ausgebildeten Endbereiche der Teilmaterialbahnen aufweist.

Textile Materialbahnen, welche beispielsweise zur Herstellung von Wund- und Heftpflaster verwendet werden und für Lagerung und Transport typischerweise auf Rollen aufgewickelt sind, werden für eine kontinuierliche Weiterverarbeitbarkeit häufig durch Verschweißen oder Vernähen zu Endlosmaterial verbunden.

Die Druckschrift DE 10 2010 016 610 B4 offenbart beispielsweise ein Verfahren zur Ausbildung eines textilen Trägermaterials zur Herstellung beschichteter textiler Strukturen, bei welchem das textile Trägermaterial aus miteinander verbundenen Rohbahnen aus Vliesstoff ausgebildet wird. Hierbei werden die Rohbahnen senkrecht zu einer Warenlaufrichtung derart miteinander verschweißt, dass die miteinander durch Schweißen verbundenen Rohbahnen an der Verbindungsstelle eine durchlaufende Schweißnaht mit hoher Festigkeit aufweisen. Zum Glätten des Vliesstoffes wird das textile Trägermaterial nach dem Schweißen kalandert.

Durch das Verschweißen oder Vernähen einzelner Materialbahnen miteinander weist das hergestellte textile Endlosmaterial jedoch insbesondere an den Naht- und Schweißstellen eine andere Materialdicke als auch andere Materialeigenschaften als die miteinander verbundenen Rohbahnen auf. Jede dieser Naht- und Schweißstellen stellt in der weiteren Verarbeitung einen Mangel dar, welcher einen erheblichen Einfluss auf die Nacharbeit aber auch auf die Material- und Ressourcenverwendung hat.

In der Druckschrift DE 20 2011 103 915 U1 ist ein Verfahren zum Verbinden von Vliesmaterialien mittels Wasserstrahlverfestigung bzw. Nadeltechnologie beschrieben, bei welchem zu verbindende Vliesendbereiche stufenweise ausgekämmt, überlappend angeordnet und vorzugsweise mittels einer oberhalb und/oder unterhalb der Verbindungsstelle angeordneten Wasserstrahldüsenleiste verfestigt werden. Zum Auskämmen wird ein Hydro-Splicing verwendet, das manuell erfolgt und bei dem die Vliesenden bis zur Einzelfaser aufgelöst werden.

Die Druckschrift EP 2 918 711 A2 beschreibt eine Vorrichtung zum Verbinden von Enden von Vliesbahnen miteinander, mittels Druckluft. Vor dem Verbinden der beiden Enden wird die Faserdichte der zu verbindenden Enden durch Reißen verringert. Hierbei wird das Ende der ersten Vliesbahn durch Klemmen der ersten Vliesbahn zwischen Walzen und Rückwärtsbewegung einer Transportwalze, welche eigentlich dem Abwickeln der Vliesbahn von einer Vliesrolle dient, ausgebildet. Durch die Rotation der Transportwalze reißt die erste Vliesbahn undefiniert an irgendeiner Stelle zwischen den Walzen und der Transportwalze. Das zweite Ende wird durch Ansaugen und Klemmen der zweiten Vliesbahn in einer Saugdüse und Rückwärtsbewegung der Transportwalze ausgebildet.

Die Druckschrift DE 10 2010 063 870 A1 beschreibt ein Verfahren zum Verbinden von Foliensubstraten aus thermoplastischem Kunststoff, wobei die zu verbindenden Foliensubstrate stoffschlüssig, vorzugsweise mittels Schweißen, miteinander verbunden werden. Zum Verschweißen von zwei Foliensubstratenden, werden diese entweder aneinanderstoßend angeordnet oder mit komplementären Profilierungen versehen, welche sich überlappend angeordnet werden. Beim Verschweißen der beiden Substratfolienenden entstehen Unebenheiten, wie zum Beispiel Grate und Schmelzränder, welche nach dem Verschweißen durch Schleifen oder Glätten, z.B. mit Ultraschall oder durch mechanisches Abtragen der Überstände, z.B. durch Fräsen oder Schleifen, eingeebnet werden müssen.

Es ist daher die Aufgabe der vorliegenden Erfindung, ein Verfahren und eine Vorrichtung zum Herstellen einer textilen Gesamtmaterialbahn bereitzustellen, bei welcher an den Materialverbindungsstellen keine signifikanten Materialdicken- oder Qualitätsänderungen auftreten.

Die Aufgabe wird zum einen durch ein Verfahren der oben genannten Gattung gelöst, , bei dem die Endbereiche der Teilmaterialbahnen zueinander komplementär durch wenigstens ein rotierendes Messer einer Schneideeinrichtung und/oder durch Wasserstrahl-, Laserstrahl- und/oder Plasmaschneiden zugeschnitten werden, und die zueinander komplementär ausgebildeten Endbereiche einander überdeckend angeordnet werden, wofür die beiden Teilmaterialbahnen aufeinander zu bewegt werden..

Durch die komplementär ausgebildeten Endbereiche ist es erfindungsgemäß möglich, die Teilmaterialbahnen übereinander anzuordnen, ohne dass in diesem Bereich eine wesentliche Dickenvergrößerung stattfindet. Vielmehr ergänzen sich die Teilmaterialbahnen in ihren Endbereichen, sodass im Ergebnis aus den miteinander verbundenen Teilmaterialbahnen eine Gesamtmaterialbahn ausgebildet werden kann, deren Eigenschaften im Verbindungsbereich der Teilmaterialbahnen denen im sonstigen Verlauf der Teilmaterialbahnen weitgehend entsprechen und daher von einem Anwender der Gesamtmaterialbahn nicht als nachteilig empfunden werden.

Durch das Vernadeln, die Wasserstrahlverfestigung und/oder die Luftstrahlverfestigung werden einzelne Fasern aus dem Faserverbund der übereinander angeordneten textilen Teilmaterialbahnen herausgezogen, welche sich mit dem übrigen Material der Teilmaterialbahnen verhaken und/oder dieses umschlingen. Resultierend kann eine homogene, stabile und zusatzstofffreie Gesamtmaterialbahn erzeugt werden.

Als besonders vorteilhaft hat es sich erwiesen, wenn das Vernadeln, die Wasser- und/oder Luftstrahlverfestigung beidseitig der Teilmaterialbahnen, zueinander gegenläufig ausgeführt wird, da so ein besonders guter Faserzusammenhalt und eine vollständige Homogenität erzeugt werden kann.

Erfindungsgemäß lassen sich gewebte als auch ungewebte Teilmaterialbahnen miteinander verbinden. Ebenso können die zu verbindenden Teilmaterialbahnen aus allen nur denkbaren Fasern ausgebildet sein. Insbesondere können die Teilmaterialbahnen auch Carbon- oder Glasfasern aufweisen.

Vorzugsweise werden bei dem erfindungsgemäßen Verfahren die Endbereiche der Teilmaterialbahnen zueinander komplementär zugeschnitten, gerissen und/oder geschliffen, wodurch eine Gesamtmaterialbahn mit nahezu konstanter Materialdicke ausgebildet werden kann. Insbesondere an den Verbindungsstellen, an welchen die Teilmaterialbahnen sich überlappend angeordnet werden, entstehen keine Materialverdickungen in Form von Wülsten oder ähnlichem. Vorteilhafterweise kann so eine Gesamtmaterialbahn mit hoher Qualität und konformen Eigenschaften erzeugt werden. Entsprechend kann die komplette hergestellte Gesamtmaterialbahn ohne Materialverluste weiterverarbeitet werden.

In besonders bevorzugten Ausbildungen des erfindungsgemäßen Verfahrens werden die Endbereiche der Teilmaterialbahnen in Form von einander ergänzenden Schrägen oder Stufen ausgebildet. Insbesondere die Ausbildung der Endbereiche in Form von sich ergänzenden Schrägen hat sich als besonders geeignet erwiesen, da sich eine solche Form besonders einfach und kostengünstig durch Schneiden herstellen lässt. Anwendungsfallspezifisch können hierfür alle denkbaren Schneideverfahren, wie beispielsweise Wasserstrahl-, Laserstrahl- und/oder Plasmaschneiden, aber auch Schneiden mittels eines oder mehrerer Messer(s) zum Einsatz kommen.

Es hat sich als besonders günstig erwiesen, wenn bei dem erfindungsgemäßen Verfahren die Schräge bei der ersten Teilmaterialbahn in einem ersten Schnittwinkel von 30 bis 60° zu einer Oberfläche der ersten Teilmaterialbahn ausgebildet wird, während die Schräge der zweiten Teilmaterialbahn in einem zweiten Schnittwinkel von 90° abzüglich des ersten Schnittwinkels zu der Oberfläche der ersten Teilmaterialbahn ausgebildet wird.

Ein solcher Winkelschnitt ist einfach und kostengünstig durchführbar. Zudem lassen sich die Teilmaterialbahnen durch einen Winkelschnitt mit den vorgeschlagenen Schnittwinkeln besonders günstig fügen. Insofern die Teilmaterialbahnen die vorgeschlagenen Schnittwinkel aufweisen, weisen die übereinandergelegten Teilmaterialbahnen im Überlappungsbereich direkt nach dem Übereinanderlegen eine um ca. 20 % erhöhte Materialdicke auf, welche im erfindungsgemäßen Verfahren durch das Vernadeln, die Wasser- und/oder die Luftstrahlverfestigung nahezu exakt auf die Materialdicke der übrigen Bereiche der Gesamtmaterialbahn reduziert werden kann. Resultierend weist die erzeugte Gesamtmaterialbahn über ihre gesamte Länge eine konstante Materialdicke auf.

Besonders stabile Verbindungsstellen ergeben sich bei dem erfindungsgemäßen Verfahren, wenn die Wirkrichtung der wenigstens einen Nadel, des wenigstens einen Wasserstrahls und/oder des wenigstens einen Luftstrahls in einem Winkel zwischen 30° und 90° zu der Oberfläche der ersten Materialbahn verlaufend ausgerichtet wird.

Insbesondere in Abhängigkeit von der Form der Endbereiche kann in alternativen Ausführungsformen jedoch auch eine andere Wirkrichtung gewählt werden. Parameter wie die Nadelanzahl, die Stichmenge und/oder Wasser- oder Luftstrahlkontakthäufigkeit sowie die Stich-, Wasser- und/oder Luftstrahlausrichtung sind material- und/oder anwendungsabhängig auszuwählen.

Äußerst homogene Verbindungsstellen erhält man bei dem erfindungsgemäßen Verfahren dann, wenn die zu verbindenden Endbereiche solange vernadelt, wasserstrahlverfestigt und/oder luftstrahlverfestigt werden, bis die Materialdicke der Gesamtmaterialbahn im Bereich der miteinander verbundenen Endbereiche gleich der Materialdicke angrenzender Bereiche der Teilmaterialbahnen ist. Die Verfestigungszeit ist hierbei insbesondere von der Art und Anordnung des Fasermaterials, aus dem die Teilmaterialbahnen ausgebildet sind, sowie den Prozessparametern der Vernadelungs-, Wasser- und/oder Luftstrahlverfestigungseinrichtung abhängig.

Die Stabilität der Verbindungsstelle kann noch erhöht werden, wenn in einer Ausgestaltung des erfindungsgemäßen Verfahrens das Vernadeln, die Wasserstrahlverfestigung und/oder die Luftstrahlverfestigung beidseitig der Teilmaterialbahnen ausgeführt wird. Zudem wird durch das beidseitige Vernadeln, die beidseitige Wasserstrahlverfestigung und/oder die beidseitige Luftstrahlverfestigung ein Material mit hoher Homogenität ausgebildet.

Vorzugsweise werden bei Ausbildungen des erfindungsgemäßen Verfahrens Zuführung und Positionierung der zu verbindenden Teilmaterialbahnen durch eine Bandlagensteuerung geregelt. Durch die Bandlagensteuerung kann eine millimetergenaue Zuführung der Teilmaterialbahnen zu der Endbereichsmodifikationseinrichtung und der Verbindungseinrichtung gewährleistet werden, was essentiellen Einfluss auf die Qualität der hergestellten Gesamtmaterialbahn hat. Die Zuführgeschwindigkeit sollte hierbei anwendungsfallspezifisch ausgewählt werden.

Es hat sich als besonders vorteilhaft erwiesen, wenn die Bandlagensteuerung mit in die Teilmaterialbahnen eingebrachten Detektorstreifen, beispielsweise Kontraststreifen, oder Teilmaterialbahnkanten wechselwirkt.

Vorteilhaft kann es auch sein, wenn nach der Verbindung der Teilmaterialbahnen die Gesamtmaterialbahn konfektioniert wird. Beim Konfektionieren der Gesamtmaterialbahn kann jede beliebige Endform hergestellt werden, wobei diese Endform zum Beispiel durch Schneiden, Stanzen, Lochen und/oder Reißen erzeugt werden kann. Die konfektionierte Ware kann anschließend entweder weiterverarbeitet, beispielsweise veredelt, oder für den Versand vorbereitet werden.

In Varianten des erfindungsgemäßen Verfahrens kann zur weiteren Stabilitätserhöhung der Verbindungsstelle in oder an die Verbindungsstelle der verbundenen Endbereiche wenigstens ein längs der Verbindungsstelle verlaufender Streifen aus einem Opfermaterial ein- oder angebracht werden. Der Opferstreifen ist vorzugsweise aus dem gleichen Material wie die Teilmaterialbahnen ausgebildet, kann jedoch auch aus einem anderen Material bestehen, und erhöht die Zugfestigkeit der Verbindungsstelle zusätzlich. Anwendungsfallspezifisch kann der Opferstreifen mittels des gleichen Textilherstellungsverfahrens wie die Teilmaterialbahnen oder mittels eines anderen hergestellt sein.

Die Aufgabe wird darüber hinaus durch eine Vorrichtung der eingangs genannten Gattung gelöst, welche wenigstens eine Endbereichsmodifikationseinrichtung aufweist, mit der die Endbereiche der Teilmaterialbahnen in Materialdickenrichtung komplementär zueinander ausbildbar sind, wenigstens eine Legeeinrichtung, mit der die komplementär einander ausgebildeten Endbereiche der Teilmaterialbahnen einander überdeckend anordenbar sind, und die Verbindungseinrichtung wenigstens eine Vernadelungseinrichtung, wenigstens eine Wasserstrahlverfestigungseinrichtung und/oder wenigstens eine Luftstrahlverfestigungsvorrichtung zum Verbinden der sich überdeckenden, komplementär zueinander ausgebildeten Endbereiche der Teilmaterialbahnen aufweist.

Erfindungsgemäß werden die Teilmaterialbahnen zunächst mittels der wenigstens einen Zuführvorrichtung in die Endbereichsmodifikationsvorrichtung transportiert, wo sie vorzugsweise mittels einer Fixiereinrichtung, welche beispielsweise seitlich der Teilmaterialbahnen angeordnete Klemmelemente umfasst, fixiert werden. Durch das Fixieren der Teilmaterialbahnen kann eine einfache und genaue Bearbeitung der Endbereiche der Materialbahnen sichergestellt werden.

In der Endbereichsmodifikationsvorrichtung werden die Endbereiche der Materialbahnen derart bearbeitet, dass diese nach der Bearbeitung eine zueinander komplementäre Form ausbilden. Nachdem die Endbereiche modifiziert wurden, wird die Fixierung der Teilmaterialbahnen aufgehoben und die Teilmaterialbahnen werden mittels der Zuführeinrichtung zu der Verbindungseinrichtung transportiert. Je nach Ausführungsform der erfindungsgemäßen Vorrichtung kann die Zuführvorrichtung beispielsweise als Transportband, Greifervorrichtung oder anders ausgebildet sein.

In der Verbindungseinrichtung werden die Teilmaterialbahnen derart mit der Legeeinrichtung angeordnet und vorzugsweise fixiert, dass sich die modifizierten, komplementär zueinander ausgebildeten Endbereiche der Teilmaterialbahnen überlappen, sodass durch das Vernadeln und/oder die Wasser- und/oder die Luftstrahlverfestigung eine Gesamtmaterialbahn mit nahezu konstanter Materialdicke und homogenen Materialeigenschaften ausgebildet werden kann. Die hergestellte Gesamtmaterialbahn wird anschließend weiter transportiert und beispielsweise auf eine Materialrolle aufgewickelt oder in eine sich an die Verbindungsvorrichtung anschließende Weiterbearbeitungsvorrichtung eingebracht.

Erfindungsgemäß weist die Endbereichsmodifikationseinrichtung eine Schneideinrichtung auf, wobei mit der Schneideeinrichtung kostengünstig herstellbare, sehr gut aufeinander abgestimmte Endbereiche erzeugt werden können.

Erfindungsgemäß kann die Schneideeinrichtung beispielsweise wenigstens eine Messereinheit, wenigstens eine Wasserstrahlschneideeinrichtung und/oder wenigstens eine Laserstrahlschneideeinrichtung aufweisen. Dabei sind die Messereinheit, die Wasserstrahlschneideeinrichtung und/oder die Laserstrahlschneideeinrichtung vorzugsweise ober- und/oder unterhalb der in der Endbereichsmodifikationseinrichtung eingebrachten Teilmaterialbahnen vorgesehen.

Erfindungsgemäß weist die Messereinheit wenigstens ein rotierendes Messer auf, da durch die Verwendung eines rotierenden Messers sehr genau kostengünstige Schnitte erzeugt werden können. Zudem ist ein solches Messer auch sehr schnell austauschbar, sodass dieses durch ein neues, schärferes oder eines mit anderen Eigenschaften ausgetauscht werden kann. Resultierend können problemlos und sehr produktiv Teilmaterialbahnen mit unterschiedlichen Eigenschaften bearbeitet werden.

Anwendungsfallspezifisch können die zu verbindenden Materialbahnen mittels lediglich einer Messereinheit, einer Wasserstrahlschneideeinrichtung und/oder einer Laserstrahlschneideeinrichtung bearbeitet werden, oder die Endbereiche der beiden Teilmaterialbahnen werden jeweils mit einer separaten Messereinheit, Wasser- und/oder Luftstrahlschneideeinrichtung modifiziert.

In bevorzugten Ausgestaltungen der erfindungsgemäßen Vorrichtung ist die Verbindungseinrichtung beidseitig der Teilmaterialbahnen vorgesehen. Dies hat sich als vorteilhaft herausgestellt, da so besonders stabile, homogene, eine konstante Materialdicke aufweisende Gesamtmaterialbahn erzeugt werden kann.

Es hat sich als besonders günstig erwiesen, wenn in Ausbildungen der erfindungsgemäßen Vorrichtung die Wirkrichtung der Verbindungseinrichtung in einem Winkel von 30° bis 90° zu der Oberfläche wenigstens einer der zu verbindenden Teilmaterialbahnen verläuft.

In vorteilhaften Ausführungsbeispielen der erfindungsgemäßen Vorrichtung weist die Vernadelungseinrichtung wenigstens eine runde, mit versetzt angeordneten Nadeln versehene Nadelkassette auf.

Insbesondere das Verbinden der Endbereiche mittels einer Vernadelungseinrichtung hat sich aus Kosten-, Produktivitäts- und Qualitätsgründen als besonders geeignet erwiesen. Hierbei hat sich gezeigt, dass insbesondere durch runde Nadelkassetten mit versetzten Nadeln qualitativ hochwertige Gesamtmaterialbahnen bereitgestellt werden können. Je nach Ausführungsform der erfindungsgemäßen Vorrichtung können sich die Nadelkassetten hierbei über die gesamte Breite der Teilmaterialbahnen erstrecken oder lediglich partiell vorgesehen sein, wobei insbesondere bei letzteren auch mehrere Nadelkassetten auf einer Seite der Teilmaterialbahnen vorgesehen sein können. Ebenso können die Nadelkassetten in alternativen Ausführungsformen der erfindungsgemäßen Vorrichtung auch eine andere Form und Anordnung der Nadeln aufweisen. Die Nadelanzahl, Ausrichtung der Nadeln sowie deren Beschaffenheit sollte anwendungsfallspezifisch ausgewählt werden.

In zweckmäßigen Ausgestaltungen der Erfindung weist die wenigstens eine Zuführeinrichtung der Vorrichtung wenigstens eine Abrollvorrichtung zum Abrollen wenigstens der ersten Teilmaterialbahn auf.

Die die Teilmaterialbahn aufweisende Materialrolle kann von der Abrollvorrichtung aufgenommen, und mithilfe dieser kann ein erstes Ende der Teilmaterialbahn der Endbereichsmodifikationseinrichtung zugeführt werden. Die Abrollgeschwindigkeit, das Abrollverhalten sowie die Abrollrichtung werden hierbei vorzugsweise durch eine zentrale Steuer- und Regelungseinheit der Vorrichtung übernommen. Als besonders vorteilhaft hat es sich erwiesen, wenn Abrollgeschwindigkeit in Abhängigkeit von dem Schneide- und/oder Verbindungsprozess eingestellt wird.

Vorteilhaft ist es auch, wenn die Vorrichtung wenigstens eine Bandlagensteuerungseinrichtung aufweist, welche eine positions- und geschwindigkeitsgenaue Zuführung der Teilmaterialbahnen zueinander ermöglicht. Vorzugsweise agiert die Bandlagensteuerungseinrichtung anhand von in den Teilmaterialbahnen eingebrachten Detektorstreifen, wie beispielsweise Kontraststreifen, oder anhand von Bahnkanten der Teilmaterialbahnen mit Hilfe eines oder mehrerer Farb- und/oder Kontrastsensoren.

Als besonders vorteilhaft hat es sich auch herausgestellt, wenn die Vorrichtung wenigstens eine Konfektioniervorrichtung zum Konfektionieren einer aus den verbundenen Teilmaterialbahnen bestehenden Gesamtmaterialbahn aufweist.

Die Konfektioniervorrichtung kann sich unmittelbar an die Verbindungseinrichtung anschließen, sodass die Gesamtmaterialbahn direkt konfektioniert werden kann. Hierzu kann die Konfektioniervorrichtung beispielsweise eine Zuschneidevorrichtung aufweisen, mittels welcher die gewünschte konfektionierte Ware zugeschnitten werden kann. Zum Zuschneiden kann die Zuschneidevorrichtung eine Messereinheit, eine Laserstrahlschneidevorrichtung und/oder eine Wasserstrahlschneidevorrichtung aufweisen. Alternativ kann die konfektionierte Ware auch durch Stanzen, Lochen oder Reißen erzeugt werden. Ebenso ist es auch denkbar, dass die konfektionierte Ware manuell oder teilautomatisiert erzeugt wird.

Vorteilhafterweise können durch einen direkten Anschluss der Konfektioniervorrichtung an den Gesamtmaterialbahnherstellungsprozess aufwändige und kostenintensive Zwischenschritte bei der Herstellung der Konfektionsware vermieden werden.

Eventuell bei an der Verbindungseinrichtung abgebrochene und in die Verbindungsstelle ungewollterweise eingebrachte Nadeln oder Nadelteile können bei einer Variante der erfindungsgemäßen Vorrichtung detektiert werden, wenn diese wenigstens einen an oder in Materialtransportrichtung nach der Verbindungseinrichtung vorgesehenen Metallsensor aufweist.

Von Vorteil ist es auch, wenn die erfindungsgemäße Vorrichtung wenigstens eine zentrale Steuer- oder Regeleinrichtung aufweist, mittels welcher die wenigstens eine Zuführeinrichtung, die Bandlagensteuerungseinrichtung, die Konfektioniereinrichtung, die Endbereichsmodifikationseinrichtung und/oder die Verbindungseinrichtung zentral steuer- oder regelbar sind.

In besonders praxistauglichen Ausgestaltungen der erfindungsgemäßen Vorrichtung weist diese eine Prozessüberwachungseinrichtung auf. Durch eine solche Prozessüberwachungseinrichtung können Störungen an der Vorrichtung bzw. im Verfahren akustisch, optisch und/oder haptisch kenntlich gemacht werden, wodurch lange Stillstandszeiten und Produktionsausfälle vermieden werden können. Hierbei hat es sich auch als vorteilhaft erwiesen, wenn die Prozessüberwachungseinrichtung mit wenigstens einem Metallsensor und/oder einer Prüfeinrichtung, welche beispielsweise Löcher in den Teilmaterialbahnen identifiziert, verbunden ist.

Bei einer textilen Gesamtmaterialbahn, die aus einer ersten und einer zweiten textilen Teilmaterialbahn zusammengesetzt ist, wobei die erste und die zweite Teilmaterialbahn an quer zur Materiallängsrichtung der Teilmaterialbahnen verlaufenden Endbereiche der beiden Teilmaterialbahnen miteinander verbunden sind, sind die Endbereiche der Teilmaterialbahnen in Materialdickenrichtung komplementär zueinander ausgebildet, wobei die zueinander komplementär ausgebildeten Endbereiche einander überdecken und durch Vernadeln, Wasserstrahlverfestigung und/oder Luftstrahlverfestigung miteinander verbunden sind.

Die textile Gesamtmaterialbahn weist aufgrund der komplementär ausgebildeten und dann miteinander vernadelten, mittels Wasser- oder Luftstrahl verfestigten Endbereiche der Teilmaterialbahnen über die gesamte Ausdehnung homogene Eigenschaften auf.

Die Gesamtmaterialbahn kann aus unterschiedlichen Fasern mit unterschiedlichen Eigenschaften ausgebildet sein. Insbesondere kann die Gesamtmaterialbahn auch Carbon- oder Glasfasern aufweisen.

Besonders bevorzugt ist die Gesamtmaterialbahn aus Vlies ausgebildet, kann jedoch auch aus Gestrick, Filz, Gelege, Gewebe oder ähnlichem ausgebildet sein.

Bevorzugt ist die Materialdicke der Gesamtmaterialbahn im Bereich der verbundenen Endbereiche der Teilmaterialbahnen gleich der Materialdicke angrenzender Bereiche der Teilmaterialbahnen.

Vorzugsweise sind bei Ausführungen der Gesamtmaterialbahn die Endbereiche der Teilmaterialbahnen in Form von einander ergänzenden Schrägen oder Stufen ausgebildet. Derartige Formen lassen sich besonders einfach und kostengünstig erzeugen. Zudem können die Endbereiche bei Verwendung solcher Formen besonders vorteilhaft übereinander abgelegt werden. Ferner können die Endbereiche in alternativen Ausgestaltungsvarianten auch andere Formen, beispielsweise eine Wellenform oder Zickzackform aufweisen.

In vorteilhaften Ausbildungen der Gesamtmaterialbahn ist die Schräge bei der ersten Teilmaterialbahn in einem ersten Schnittwinkel von 30 bis 60° zu einer Oberfläche der ersten Teilmaterialbahn ausgebildet, während die Schräge der zweiten Teilmaterialbahn in einem zweiten Schnittwinkel von 90° abzüglich des ersten Schnittwinkels zu der Oberfläche der ersten Teilmaterialbahn ausgebildet ist.

Derartige Schnittwinkel eignen sich insbesondere dahingehend, dass die Endbereiche derart dickenreduziert sind, dass diese nach dem Aufeinanderanordnen nur eine um ca. 20 % erhöhte Materialdicke im Vergleich zu den restlichen Bereichen der Teilmaterialbahnen aufweisen. Durch das Vernadeln, die Wasser- und/oder Luftstrahlverfestigung ergibt sich dann letztlich eine über die Gesamtmaterialbahn nahezu konstante Materialdicke. Alternativ können die Endbereiche jedoch auch mit einem anderen Schnittwinkel abgeschnitten sein.

In geeigneten Weiterbildungen der Gesamtmaterialbahn ist die Gesamtmaterialbahn konfektioniert.

Eine besonders hohe Stabilität der Verbindungsstelle ist bei Ausführungen der Gesamtmaterialbahn dann gegeben, wenn in oder an die Verbindungsstelle der verbundenen Endbereiche wenigstens ein längs der Verbindungsstelle verlaufender Streifen aus einem Opfermaterial ein- oder angebracht ist. Das Opfermaterial besteht hierbei vorzugsweise aus demselben oder ähnlichen Material wie die Gesamtmaterialbahn, kann alternativ jedoch auch aus einem anderen Material ausgebildet sein.

Vorteilhafte Ausführungsformen der vorliegenden Erfindung, deren Aufbau, Funktion und Vorteile sind im Folgenden anhand von Figuren näher erläutert, wobei
- Figur 1: schematisch einzelnen Verfahrensschritte einer Ausführungsform des erfindungsgemäßen Verfahrens zeigt;
- Figur 2: schematisch zu einer Gesamtmaterialbahn zu verbindende Teilmaterialbahnen vor dem Bearbeiten von deren Endbereichen in einer Draufsicht zeigt;
- Figur 3: schematisch die Teilmaterialbahnen aus Figur 2 nach der Bearbeitung von deren Endbereichen in einer Draufsicht zeigt;
- Figur 4: schematisch zu verbindende Teilmaterialbahnen während des Verbindens zu einer Gesamtmaterialbahn in einer Draufsicht zeigt;
- Figur 5: schematisch ein Ausführungsbeispiel einer erfindungsgemäßen Vorrichtung zum Herstellen einer textilen Gesamtmaterialbahn in einer Draufsicht zeigt;
- Figur 6: schematisch die Vorrichtung aus Figur 5 in einer Seitenansicht zeigt; und
- Figur 7: schematisch eine weitere Ausgestaltungsmöglichkeit einer erfindungsgemäßen Vorrichtung zum Herstellen einer textilen Gesamtmaterialbahn in einer Seitenansicht zeigt.

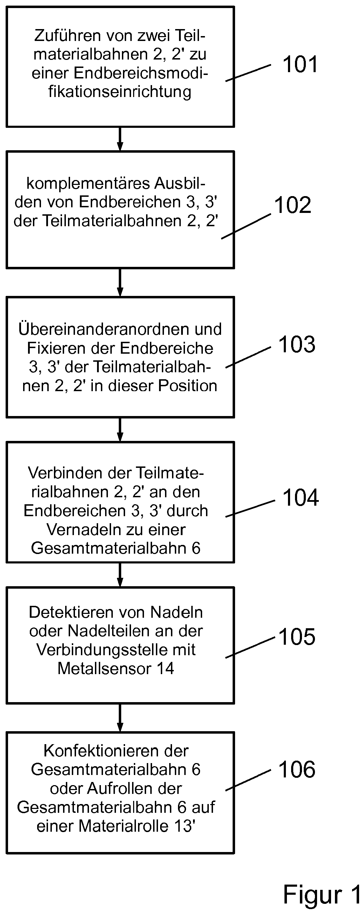

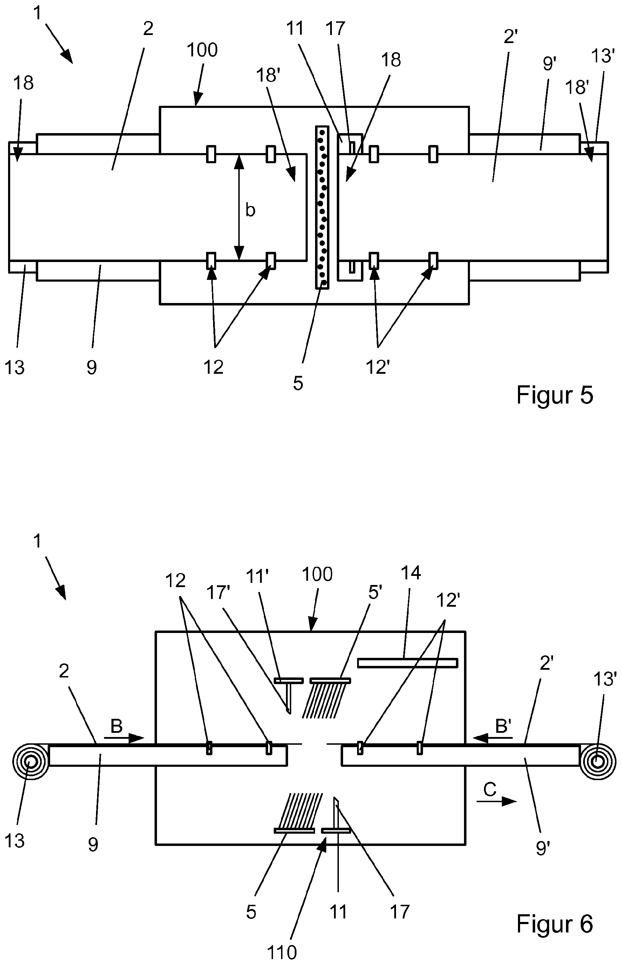

Figur 1 zeigt schematisch einzelne Verfahrensschritte einer Ausführungsform des erfindungsgemäßen Verfahrens, welche in anderen Ausführungsformen des erfindungsgemäßen Verfahrens auch durch weitere Verfahrensschritte ergänzt und/oder teilweise durch andere Verfahrensschritte ausgetauscht werden können. Mögliche Vorrichtungen zur Ausführung des erfindungsgemäßen Verfahrens sind schematisch und beispielhaft in den Figuren 5 bis 7 gezeigt.

In einem ersten Verfahrensschritt 101 werden zu verbindende Teilmaterialbahnen 2, 2' jeweils von einer eine Materialrolle 13, 13' aufweisenden Zuführeinrichtung 9, 9' abgewickelt und einer Endbereichsmodifikationseinrichtung zugeführt.

Die Lagerung der Teilmaterialbahnen 2, 2' auf Materialrollen 13, 13' hat sich hinsichtlich des Handlings sowie die Platzbedarfes als besonders vorteilhaft erwiesen. In anderen Ausgestaltungen des erfindungsgemäßen Verfahrens können jedoch auch beispielsweise lagenartige übereiander gestapelte Teilmaterialbahnen 2, 2' verwendet werden.

Die Endbereichsmodifikationseinrichtung kann beispielsweise eine Schneideeinrichtung, wie die schematisch in Figur 6 gezeigte Schneideeinrichtung 110, sein, mit der die Endbereiche 3, 3' der Teilmaterialbahnen 2, 2' zueinander komplementär, also mit einander ergänzender Form ausgebildet werden. Anstelle der Schneideeinrichtung 110 kann als Endbereichsmodifikationseinrichtung beispielsweise auch eine Reißeinrichtung oder eine Schleifeinrichtung, wie sie von der Lederbearbeitung bekannt ist, eingesetzt werden. Ferner kann für jede Teilmaterialbahn 2, 2' auch eine eigene Endbereichsmodifikationseirichtung vorgesehen sein.

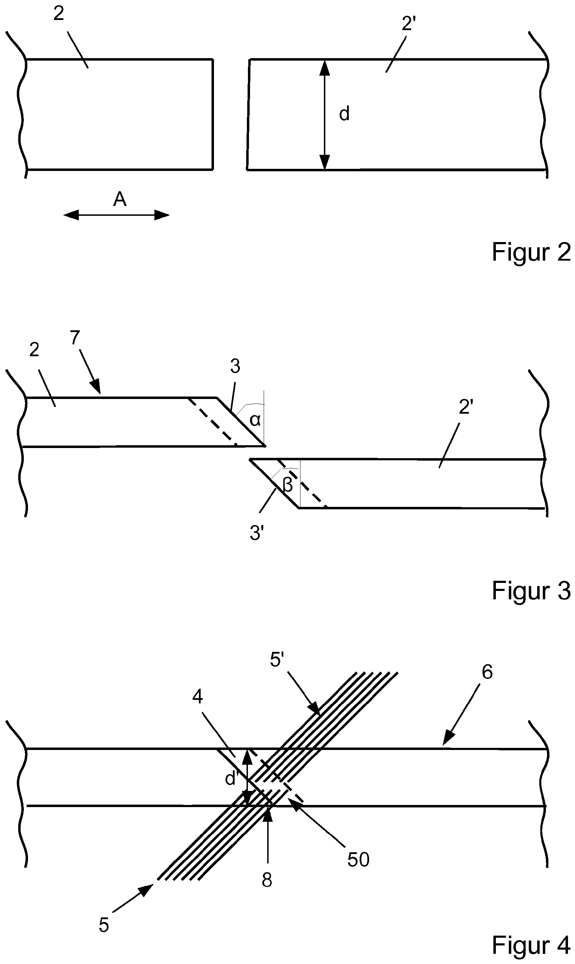

In der Endbereichsmodifikationseinrichtung, die in der in den Figuren 5 und 6 gezeigten Vorrichtung 1 zum Einsatz kommt, werden die Teilmaterialbahnen 2, 2' vorzugsweise fixiert, bevor in Schritt 102 eine sich ergänzende Form der Endbereiche 3, 3' beispielsweise mittels eines Winkelschnitts durch ein rotierendes Messer 17, 17' mit entsprechender Prozessgenauigkeit erzeugt wird. Die durch die Endbereichsmodifikationseinrichtung erzeugten komplementären Endbereiche 3, 3' der Teilmaterialbahnen 2, 2' sind schematisch in Figur 3 zu sehen. Die Endbereiche 3, 3' sind in der gezeigten Ausführungsform in Form von einander ergänzenden Schrägen ausgebildet, können jedoch beispielsweise auch stufenartig oder wellenartig, einander ergänzend ausgebildet sein.

Daraufhin werden die Teilmaterialbahnen 2, 2' mit den bearbeiteten Endbereichen 3, 3' einer Verbindungseinrichtung zugeführt. In der Verbindungsrichtung werden im Schritt 103 die jeweiligen Endbereiche 3, 3' der Teilmaterialbahnen 2, 2' derart platziert und fixiert, dass sich die Endbereiche 3, 3' in einem Bereich 4, wie es in Figur 4 schematisch zu sehen ist, überlappen. Die sich überlappenden Endbereiche 3, 3' werden nachfolgend in Schritt 104 bevorzugt mittels einer Vernadelungseinrichtung 50, wie in Figur 4 schematisch gezeigt, homogen verbunden.

In anderen Ausgestaltungen der Erfindung können die Endbereiche 3, 3' alternativ oder zusätzlich auch mittels Wasserstrahlverfestigung und/oder Luftstrahlverfestigung miteinander verbunden werden. Hierbei wird das Vernadeln, die Wasserstrahlverfestigung und/oder die Luftstrahlverfestigung in den Endbereichen 3, 3' vorzugsweise solange durchgeführt, bis die miteinander verbundenen Endbereiche 3, 3' die gleichen Materialparameter wie die angrenzenden Bereiche der Teilmaterialbahnen 2, 2' aufweisen. Parameter wie die Nadelanzahl, Stichmenge und Stichausrichtung sind hierbei materialabhängig zu wählen.

Im Ergebnis von Schritt 104 entsteht eine aus den verbundenen Teilmaterialbahnen 2, 2' zusammengesetzte Gesamtmaterialbahn 6.

Daraufhin kann in Schritt 106 eine Konfektionierung oder ein Aufrollen der Gesamtmaterialbahn 6 auf einer Materialrolle 13' erfolgen.

Bei Einsatz einer Vernadelungseinrichtung zum Verbinden der Teilmaterialbahnen 2, 2' ist in dem Ausführungsbeispiel von Figur 1 vor der Konfektionierung in Schritt 105 noch ein Detektieren von in der Gesamtmaterialbahn 6 an der Verbindungsstelle der Teilmaterialbahnen 2, 2' verbliebenen, z. B. abgebrochenen Nadeln oder Nadelteilen der Vernadelungseinrichtung mit Hilfe eines Metallsensors 14 vorgesehen.

Figur 5 zeigt schematisch ein Ausführungsbeispiel einer erfindungsgemäßen Vorrichtung 1 zum Herstellen einer textilen Gesamtmaterialbahn 6 in einer Draufsicht, wobei Figur 6 diese Ausführungsvariante der erfindungsgemäßen Vorrichtung 1 schematisch in einer Seitenansicht zeigt. Hierbei bezeichnen gleiche Bezugszeichen wie in den Figuren 1 bis 4 verwendet gleiche Komponenten, weshalb auf die vorherigen Ausführungen zu diesen Komponenten verwiesen wird.

Die von den Materialrollen 13, 13' abgewickelten Teilmaterialbahnen 2, 2' werden in dem gezeigten Ausführungsbeispiel mittels jeweils einer Zuführeinrichtung 9, 9', welche hier als Transportband ausgebildet ist, der Schneideeinrichtung 110 zugeführt. Die Schneideeinrichtung 110 weist zwei beidseitig der zu beschneidenden Teilmaterialbahnen 2, 2' angeordnete Schneidwerkzeuge 11, 11' auf, mittels welchen eine zueinander komplementäre Form der Endbereiche 3, 3' erzeugt werden kann. Insbesondere zur Erzeugung eines Winkelschnittes weisen die Schneidwerkzeuge 11, 11' jeweils ein rotierendes Messer 17, 17' auf.

Bevor die Endbereiche 3, 3' der Teilmaterialbahnen 2, 2' beschnitten werden, werden die Teilmaterialbahnen 2, 2' mittels einer Fixiereinrichtung geklemmt, um ein Verrutschen der Teilmaterialbahnen 2, 2' zu vermeiden und einen präzisen Schnitt ausführen zu können. Zum Fixieren einer Teilmaterialbahn 2, 2' weist die Fixiereinrichtung in der gezeigten Ausgestaltungsvariante jeweils vier Klemmelemente 12, 12' auf, wobei die Klemmelemente 12, 12' vorzugsweise in Materiallängsrichtung A, seitlich der Materialbahnen 2, 2' angeordnet sind, damit der Transport der Materialbahnen 2, 2' durch die Klemmelemente 12, 12' nicht behindert wird. In anderen Ausführungsformen der vorliegenden Erfindung können die Materialbahnen 2, 2' jedoch auch anders fixiert sein.

Nach dem Beschneiden der Endbereiche 3, 3' werden die Teilmaterialbahnen 2, 2' aus ihrer Fixierung gelöst und zu einer Vernadelungseinrichtung 50 transportiert, in welcher die Materialbahnen 2, 2' derart angeordnet werden, dass sich die Endbereiche 3, 3' in dem Bereich 4 überlappen. Hierfür werden die beiden Teilmaterialbahnen 2, 2' in Richtung B, B' aufeinander zubewegt. Sobald die Materialbahnen 2, 2' die gewünschte Position erreicht haben, werden die Materialbahnen 2, 2' erneut mittels der Klemmelemente 12, 12' in ihrer Lage fixiert.

Der Transport der Teilmaterialbahnen 2, 2' erfolgt vorzugsweise unter Verwendung einer nicht dargestellten Bandlagensteuerungseinrichtung, welche eine positions- und geschwindigkeitsgenaue Zuführung der Teilmaterialbahnen 2, 2' als auch der erzeugten Gesamtmaterialbahn 6 ermöglicht.

Mit der Vernadelungseinrichtung 50, welche zwei beidseitig der Teilmaterialbahnen 2, 2' angeordnete Nadelkassetten 5, 5' aufweist werden die Endbereiche 3, 3' miteinander verbunden. Hierbei werden durch das Einstechen und Herausziehen von Nadeln der Nadelkassetten 5, 5' aus den textilen Teilmaterialbahnen 2, 2' einzelne Fasern aus dem Faserverbund der Teilmaterialbahnen 2, 2' gelöst, welche sich mit dem übrigen Material der Teilmaterialbahnen 2, 2' verhaken und/oder dieses umschlingen. Resultierend wird eine stabile und zusatzstofffreie Gesamtmaterialbahn 6 erzeugt.

Figur 5 sind die Nadelkassetten 5, 5' rechteckförmig ausgebebildet und weisen versetzt angeordnete Nadeln auf. Vorteilhafterweise erstrecken sich die Nadelkassetten 5, 5' über die gesamte Breite b der Teilmaterialbahnen 2, 2', sodass die Gesamtmaterialbahn 6 mit hoher Qualität und konstanten Materialeigenschaften erzeugt werden kann. In alternativen Ausführungsformen der Erfindung können die Endbereiche 3, 3' aber auch lediglich partiell verbunden werden, wobei die Vernadelungseinrichtung 50 hierbei vorzugsweise kein sich über die gesamte Breite b der Teilmaterialbahnen 2, 2' erstreckendes Nadelkassetten 5, 5', sondern abschnittsweise die Breite b der Teilmaterialbahnen 2, 2' überdeckende Nadelkassetten aufweist.

Ferner können die Nadelkassetten 5, 5' in alternativen Ausführungsformen der erfindungsgemäßen Vorrichtung 1 auch eine andere Form als die in Figur 5 gezeigte aufweisen. Als besonders vorteilhaft hat es sich beispielsweise auch erwiesen, wenn die Nadelkassetten 5, 5' rund ausgebildet ist, wobei die Nadelkassetten 5, 5' auch hier versetzt angeordnete Nadeln aufweisen. Ebenso können die Nadelkassetten 5, 5' auch eine andere Form aufweisen, sowie eine beliebige Anzahl und Anordnung an Nadeln umfassen. Als besonders vorteilhaft hat es sich jedoch erwiesen, wenn insbesondere die Nadelstärke der Nadelkassetten 5, 5' anhand der Faserbeschaffenheit der zu verbindenden textilen Teilmaterialbahnen 2, 2' ausgewählt wird.

Nach dem Verbinden der Teilmaterialbahnen 2, 2' wird die hergestellte Gesamtmaterialbahn 6 mit Hilfe wenigstens einer der Zuführvorrichtungen 9, 9' in Richtung der Materialrolle 13' transportiert und auf diese aufgewickelt. Während des Aufwickelns wird zeitgleich ein zweites Ende 18 der Gesamtmaterialbahn 6, insofern dieses noch die Materialrolle 13 umschlingt, von der Materialrolle 13 abgewickelt.

Insbesondere um weitere Teilmaterialbahnen mit der Gesamtmaterialbahn 6 zu verbinden und diese somit noch zu verlängern, erfolgt das Aufwickeln der Gesamtmaterialbahn 6 solange, bis das zweite Ende 18 die in den Figuren 5 und 6 dargestellte Position erreicht hat, in welcher sich dieses innerhalb der Schneideeinrichtung 110 befindet. Die leere Materialrolle 13 wird nun manuell oder maschinell durch eine die Teilmaterialbahn 2 aufweisende Materialrolle 13 ausgetauscht und das erste Ende 18' der Teilmaterialbahn 2 ebenfalls der Schneideeinrichtung 110 zugeführt, sodass der Verbindungsprozess von vorn beginnen kann. Vorteilhafterweise lässt sich so eine Gesamtmaterialbahn 6 von beliebiger Länge mit konstanten Materialeigenschaften herstellen.

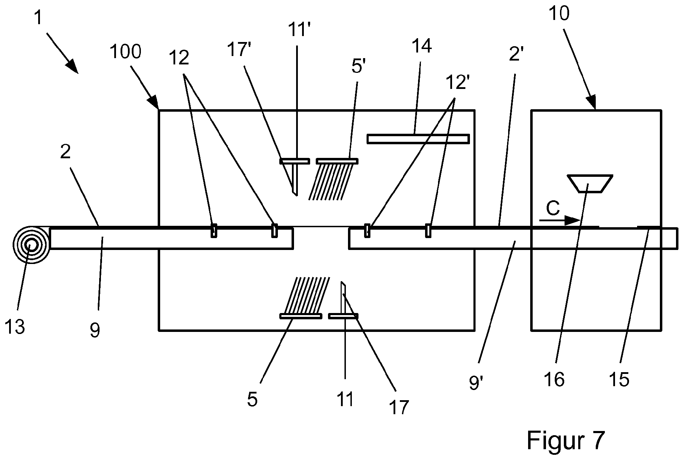

In einer alternativen Ausgestaltungsvariante der erfindungsgemäßen Vorrichtung 1, welche in Figur 7 veranschaulicht ist, wird die hergestellte Gesamtmaterialbahn 6 nicht auf die Materialrolle 13' aufgewickelt, sondern direkt einer Konfektioniereinrichtung 10 zugeführt. In der Konfektioniereinrichtung 10 wird die Gesamtmaterialbahn 6 fixiert und mittels einer Zuschneidevorrichtung 16 in die gewünschte Endform 15 gebracht. Das Zuschneiden 16 kann hierbei automatisiert erfolgen oder manuell durchgeführt werden. Ferner kann die Endform 15 mittels Stanzen oder eines anderen Herstellungsverfahrens gefertigt werden. Durch das Anschließen einer Konfektioniereinrichtung 10 an die Gesamtmaterialbahnherstellungsvorrichtung 100 können aufwändige und kostenintensive Zwischenschritte bei der Herstellung einer Konfektionsware weggelassen werden.

In dem Konfektionieren nachfolgenden, hier nicht dargestellten Verfahrensschritten kann die Konfektionsware versandfertig verpackt werden. Ebenso ist es auch möglich, die Gesamtmaterialbahn 6 einer Veredelungsvorrichtung zuzuführen.

Insbesondere um eine qualitativ hochwertige, fehlerfreie Gesamtmaterialbahn 6 zu erzeugen, weist die erfindungsgemäße Vorrichtung 1 wenigstens einen Metallsensor 14 auf, welcher der Vernadelungseinrichtung 50 nachgeordnet vorgesehen ist. Der Metallsensor 14 ist in den gezeigten Ausführungsbeispielen oberhalb der Gesamtmaterialbahn 6 vorgesehen und untersucht die unter dem Metallsensor 14 durchlaufende Gesamtmaterialbahn 6 auf Metallteile, welche sich in oder auf der Gesamtmaterialbahn 6 befinden können. Solche Metallteile können beispielsweise angebrochene Nadeln sein, welche während des Vernadelns der Teilmaterialbahnen 2, 2' in die Gesamtmaterialbahn 6 eingebracht werden.

Ferner kann die erfindungsgemäße Vorrichtung 1 noch weitere, hier nicht veranschaulichte Prüfeinrichtungen umfassen, mittels welcher die Gesamtmaterialbahn 6 beispielsweise auf Löcher oder ähnliches geprüft werden kann.

In weiteren Ausgestaltungsvarianten der erfindungsgemäßen Vorrichtung 1 können auch mehr als zwei übereinandergelegte Teilmaterialbahnen 2, 2' zu einer Gesamtmaterialbahn 6 verbundenen werden. Hierbei weist die Vorrichtung 1 vorzugsweise mehrere, hintereinander angeordnete Materialrollen 13 auf, von welchen die übereinandergelegten Teilmaterialbahnen 2, 2' abgewickelt und der Gesamtmaterialbahnherstellungsvorrichtung 100 zugeführt werden. Je nach Ausführungsform können die einzelnen übereinandergelegten Materialbahnen hierbei einfach lose übereinandergelegt der Gesamtmaterialbahnherstellungsvorrichtung 100 zugeführt werden oder vor Erreichen der Gesamtmaterialbahnherstellungsvorrichtung 100 beispielsweise durch Verkleben oder Verschmelzen miteinander verbunden werden. Ferner können die übereinander abgelegten Materialbahnen 2, 2' auch durch Vernadeln, Wasserstrahlverfestigung, Luftstrahlverfestigung oder einem anderen Verfahren innerhalb der Gesamtmaterialbahnherstellungsvorrichtung 100 miteinander verbunden werden.

## Patentansprüche

1. Verfahren zum Herstellen einer textilen Gesamtmaterialbahn (6), bei dem eine erste und eine zweite textile Teilmaterialbahn (2, 2') miteinander zu der Gesamtmaterialbahn (6) verbunden werden, indem quer zur Materiallängsrichtung (A) der Teilmaterialbahnen (2, 2') verlaufende Endbereiche (3, 3') der beiden Teilmaterialbahnen (2, 2') miteinander verbunden werden, wobei
die Endbereiche (3, 3') der Teilmaterialbahnen (2, 2') in Materialdickenrichtung (d) komplementär zueinander ausgebildet werden, und
die sich überlappenden Endbereiche (3, 3') durch Vernadeln, Wasserstrahlverfestigung und/oder Luftstrahlverfestigung miteinander verbunden werden,
**dadurch gekennzeichnet,**
**dass** die beiden Teilmaterialbahnen (2, 2') mittels jeweils einer als Transportband ausgebildeten Zuführeinrichtung (9, 9') einer Schneideeinrichtung (110) zugeführt werden, die Endbereiche (3, 3') der Teilmaterialbahnen (2, 2') mittels einer Fixiereinrichtung geklemmt werden, die Endbereiche (3, 3') der Teilmaterialbahnen (2, 2') zueinander komplementär durch wenigstens ein rotierendes Messer der Schneideeinrichtung (110) und/oder durch Wasserstrahl-, Laserstrahl- und/oder Plasmaschneiden zugeschnitten werden, und die zueinander komplementär ausgebildeten Endbereiche (3, 3') einander überdeckend angeordnet werden, wofür die beiden Teilmaterialbahnen (2, 2') in Richtung (B, B') aufeinander zubewegt werden.

2. Verfahren nach Anspruch 1, **dadurch gekennzeichnet, dass** die Endbereiche (3, 3') der Teilmaterialbahnen (2, 2') in Form von einander ergänzenden Schrägen oder Stufen oder Wellen ausgebildet werden, wobei die Schräge bei der ersten Teilmaterialbahn (2) in einem ersten Schnittwinkel (α) von 30 bis 60° zu einer Oberfläche (7) der ersten Teilmaterialbahn (2) ausgebildet wird, während die Schräge der zweiten Teilmaterialbahn (2') in einem zweiten Schnittwinkel (β) von 90° abzüglich des ersten Schnittwinkels zu der Oberfläche (7) der ersten Teilmaterialbahn (2) ausgebildet wird.

3. Verfahren nach wenigstens einem der vorhergehenden Ansprüche, **dadurch gekennzeichnet, dass** die zu verbindenden Endbereiche (3, 3') solange vernadelt, wasserstrahlverfestigt und/oder luftstrahlverfestigt werden, bis die Materialdicke (d') der Gesamtmaterialbahn (6) im Bereich der miteinander verbundenen Endbereiche (3, 3') gleich der Materialdicke (d) angrenzender Bereiche der Teilmaterialbahnen (2, 2') ist.

4. Verfahren nach wenigstens einem der vorhergehenden Ansprüche, **dadurch gekennzeichnet, dass** das Vernadeln, die Wasserstrahlverfestigung und/oder die Luftstrahlverfestigung beidseitig der Teilmaterialbahnen (2, 2') ausgeführt wird.

5. Verfahren nach wenigstens einem der vorhergehenden Ansprüche, **dadurch gekennzeichnet, dass** in oder an die Verbindungsstelle (8) der verbundenen Endbereiche (3, 3') wenigstens ein längs der Verbindungsstelle (8) verlaufender Streifen aus einem Opfermaterial ein- oder angebracht wird.

6. Vorrichtung (1) zum Herstellen einer textilen Gesamtmaterialbahn (6), mit wenigstens einer Zuführeinrichtung (9, 9'), mit der eine erste Teilmaterialbahn (2) einer zweiten Teilmaterialbahn (2') zuführbar ist und wenigstens einer Verbindungseinrichtung zum Verbinden von quer zur Materiallängsrichtung der Teilmaterialbahnen (2, 2') verlaufenden Endbereichen (3, 3') der beiden Teilmaterialbahnen (2, 2'), wobei die Vorrichtung (1) wenigstens eine Endbereichsmodifikationseinrichtung aufweist, mit der die Endbereiche (3, 3') der Teilmaterialbahnen (2, 2') in Materialdickenrichtung (d) komplementär zueinander ausbildbar sind,
und
die Verbindungseinrichtung wenigstens eine Vernadelungseinrichtung (50), wenigstens eine Wasserstrahlverfestigungseinrichtung und/oder wenigstens eine Luftstrahlverfestigungsvorrichtung zum Verbinden der sich überdeckenden, komplementär zueinander ausgebildeten Endbereiche (3, 3') der Teilmaterialbahnen (2, 2') aufweist,
**dadurch gekennzeichnet,**
**dass** die Vorrichtung (1) eine Fixiereinrichtung zum Klemmen der Teilmaterialbahnen (2, 2') aufweist, die Endbereichsmodifikationseinrichtung wenigstens eine wenigstens ein rotierendes Messer (17, 17'), wenigstens eine Wasserstrahlschneideeinrichtung, ein Mittel zum Plasmaschneiden und/oder wenigstens eine Laserstrahlschneideeinrichtung aufweisende Schneideeinrichtung (110) aufweist, und die Vorrichtung (1) wenigstens eine Legeeinrichtung aufweist, mit der die komplementär einander ausgebildeten Endbereiche (3, 3') der Teilmaterialbahnen (2, 2') einander überdeckend anordenbar sind, wofür die beiden Teilmaterialbahnen (2, 2') mittels den jeweils als Transportband ausgebildeten Zuführeinrichtungen (9, 9') in Richtung (B, B') aufeinander zubewegt werden.

7. Vorrichtung (1) nach Anspruch 6, **dadurch gekennzeichnet, dass** die Verbindungseinrichtung beidseitig der Teilmaterialbahnen (2, 2') vorgesehen ist.

8. Vorrichtung (1) nach wenigstens einem der Ansprüche 6 oder 7, **dadurch gekennzeichnet, dass** die Vernadelungseinrichtung (50) wenigstens eine runde, mit versetzt angeordneten Nadeln versehene Nadelkassette (5, 5') aufweist.

9. Vorrichtung (1) nach wenigstens einem der Ansprüche 6 bis 8, **dadurch gekennzeichnet, dass** die wenigstens eine Zuführeinrichtung (9, 9') wenigstens eine Abrollvorrichtung zum Abrollen wenigstens der ersten Teilmaterialbahn (2) aufweist.

10. Vorrichtung (1) nach wenigstens einem der Ansprüche 6 bis 9, **dadurch gekennzeichnet, dass** die Vorrichtung (1) wenigstens eine Bandlagensteuerungseinrichtung aufweist, welche eine positions- und geschwindigkeitsgenaue Zuführung der Teilmaterialbahnen (2, 2') zueinander ermöglicht.

11. Vorrichtung (1) nach wenigstens einem der Ansprüche 6 bis 10, **dadurch gekennzeichnet, dass** die Vorrichtung (1) wenigstens einen an oder in Materialtransportrichtung nach der Verbindungseinrichtung vorgesehenen Metallsensor (14) aufweist.

## Claims

1. Method for producing a complete textile material web (6), in which a first and a second partial textile material web (2, 2') are connected to one another to form the complete material web (6) by interconnecting end regions (3, 3') of the two partial material webs (2, 2') that extend transversely to the material longitudinal direction (A) of the partial material webs (2, 2'),
the end regions (3, 3') of the partial material webs (2, 2') being formed to be complementary to one another in the material thickness direction (d), and
the overlapping end regions (3, 3') being interconnected by needling, hydroentanglement and/or air entanglement,
**characterized in that**
each of the two partial material webs (2, 2') are fed to a cutting device (110) by means of a feed device (9, 9') designed as a conveyor belt, the end regions (3, 3') of the partial material webs (2, 2') are clamped by means of a fixing device, the end regions (3, 3') of the partial material webs (2, 2') are cut in a mutually complementary manner by at least one rotating blade of the cutting device (110) and/or by water jet cutting, laser cutting and/or plasma cutting, and the mutually complementary end regions (3, 3') are arranged so as to overlap with one another, for which purpose the two partial material webs (2, 2') are moved in the direction (B, B') toward one another.

2. Method according to claim 1, **characterized in that** the end regions (3, 3') of the partial material webs (2, 2') are designed in the form of mutually complementary bevels or steps or corrugations, the bevel in the first partial material web (2) being formed at a first intersection angle (α) of 30 to 60° with respect to a surface (7) of the first partial material web (2), while the bevel of the second partial material web (2') is formed at a second intersection angle (β) of 90° minus the first cutting angle with respect to the surface (7) of the first partial material web (2).

3. Method according to at least one of the preceding claims, **characterized in that** the end regions (3, 3') to be connected are needled, hydroentangled and/or air-entangled until the material thickness (d') of the complete material web (6) in the region of the interconnected end regions (3, 3') is equal to the material thickness (d) of adjacent regions of the partial material webs (2, 2').

4. Method according to at least one of the preceding claims, **characterized in that** the needling, the hydroentanglement and/or the air entanglement is carried out on both sides of the partial material webs (2, 2').

5. Method according to at least one of the preceding claims, **characterized in that** at least one strip of a sacrificial material that extends along the connection point (8) is introduced into or attached to the connection point (8) of the connected end regions (3, 3').

6. Device (1) for producing a complete textile material web (6), comprising at least one feed device (9, 9'), by means of which a first partial material web (2) can be fed to a second partial material web (2'), and at least one connecting device for connecting end regions (3, 3') of the two partial material webs (2, 2') that extend transversely to the material longitudinal direction of the partial material webs (2, 2'), the device (1) having at least one end region modification device, by means of which the end regions (3, 3') of the partial material webs (2, 2') can be formed in a mutually complementary manner in the material thickness direction (d),
and
the connecting device having at least one needling device (50), at least one hydroentangling device and/or at least one air entangling device for connecting the overlapping, mutually complementary end regions (3, 3') of the partial material webs (2, 2'),
**characterized in that**
the device (1) has a fixing device for clamping the partial material webs (2, 2'), the end region modification device has at least one cutting device (110) having at least one rotating blade (17, 17'), at least one water jet cutting device, a means for plasma cutting and/or at least one laser beam cutting device, and the device (1) has at least one laying device, by means of which the mutually complementary end regions (3, 3') of the partial material webs (2, 2') can be arranged so as to overlap with one another, for which purpose the two partial material webs (2, 2') are moved in the direction (B, B') toward one another by means of the feed devices (9, 9'), which are designed as a conveyor belt each.

7. Device (1) according to claim 6, **characterized in that** the connecting device is provided on both sides of the partial material webs (2, 2').

8. Device (1) according to at least one of claims 6 or 7, **characterized in that** the needling device (50) has at least one round needle cartridge (5, 5') provided with needles which are arranged in an offset manner.

9. Device (1) according to at least any of claims 6 to 8, **characterized in that** the at least one feed device (9, 9') has at least one unwinding apparatus for unwinding at least the first partial material web (2).

10. Device (1) according to at least one of claims 6 to 9, **characterized in that** the device (1) has at least one belt position control device which allows the partial material webs (2, 2') to be fed to one another with precise positioning and speed.

11. Device (1) according to at least one of claims 6 to 10, **characterized in that** the device (1) has at least one metal sensor (14) provided on or in the material transport direction downstream of the connecting device.

## Revendications

1. Procédé de fabrication d'une bande totale de matériau (6) textile, dans lequel une première et une seconde bandes partielles de matériau (2, 2') textiles sont reliées l'une à l'autre pour former la bande totale de matériau (6), des zones d'extrémité (3, 3') des deux bandes partielles de matériau (2, 2') s'étendant transversalement à la direction longitudinale de matériau (A) des bandes partielles de matériau (2, 2') étant reliées l'une à l'autre,
les zones d'extrémité (3, 3') des bandes partielles de matériau (2, 2') étant formées de manière complémentaire l'une à l'autre dans la direction d'épaisseur de matériau (d), et
les zones d'extrémité (3, 3') se chevauchant sont reliées entre elles par aiguilletage, consolidation par jet d'eau et/ou consolidation par jet d'air,
**caractérisé en ce**
**que** les deux bandes partielles de matériau (2, 2') sont amenées à un système de découpe (110) au moyen d'un dispositif d'alimentation (9, 9') respectif conçu en tant que tapis de transport, les zones d'extrémité (3, 3') des bandes partielles de matériau (2, 2') sont serrées au moyen d'un système de fixation, les zones d'extrémité (3, 3') des bandes partielles de matériau (2, 2') sont coupées de manière complémentaire l'une à l'autre par au moins un couteau rotatif du système de découpe (110) et/ou par découpe par jet d'eau, faisceau laser et/ou plasma, et les zones d'extrémité (3, 3') conçues de manière complémentaire l'une à l'autre sont disposées en se chevauchant, moyennant quoi les deux bandes partielles de matériau (2, 2') sont rapprochées l'une à l'autre dans la direction (B, B').

2. Procédé selon la revendication 1, **caractérisé en ce que** les zones d'extrémité (3, 3') des bandes partielles de matériau (2, 2') sont conçues sous la forme d'inclinaisons ou de marches ou d'ondulations complémentaires l'une à l'autre, l'inclinaison de la première bande partielle de matériau (2) étant conçue selon un premier angle de coupe (α) de 30 à 60° par rapport à une surface (7) de la première bande partielle de matériau (2), tandis que l'inclinaison de la seconde bande partielle de matériau (2') est conçue à un second angle de coupe (β) de 90° moins le premier angle de coupe par rapport à la surface (7) de la première bande partielle de matériau (2).

3. Procédé selon au moins l'une des revendications précédentes, **caractérisé en ce que** les zones d'extrémité (3, 3') à relier sont aiguilletées, consolidées par jet d'eau et/ou consolidées par jet d'air tant et si bien que l'épaisseur de matériau (d') de la bande totale de matériau (6) dans la zone des zones d'extrémité (3, 3') reliées l'une à l'autre soit égale à l'épaisseur de matériau (d) des zones adjacentes des bandes partielles de matériau (2, 2').

4. Procédé selon au moins l'une des revendications précédentes, **caractérisé en ce que** l'aiguilletage, la consolidation par jet d'eau et/ou la consolidation par jet d'air sont réalisées des deux côtés des bandes partielles de matériau (2, 2').

5. Procédé selon au moins l'une des revendications précédentes, **caractérisé en ce qu'**au moins une lanière d'un matériau sacrificiel s'étendant le long du point de liaison (8) est insérée dans ou est montée au niveau du point de liaison (8) des zones d'extrémité (3, 3') reliées.

6. Dispositif (1) de fabrication d'une bande totale de matériau (6) textile, comportant au moins un système d'alimentation (9, 9') avec lequel une première bande partielle de matériau (2) peut être alimentée à une seconde bande partielle de matériau (2') et au moins un système de liaison permettant de relier des zones d'extrémité (3, 3') des deux bandes partielles de matériau (2, 2') s'étendant transversalement à la direction longitudinale de matériau des bandes partielles de matériau (2, 2'), le dispositif (1) présentant au moins un système de modification de zone d'extrémité par lequel les zones d'extrémité (3, 3') des bandes partielles de matériau (2, 2') peuvent être formées de manière complémentaire l'une à l'autre dans la direction d'épaisseur de matériau (d),
et
le système de liaison présente au moins un système d'aiguilletage (50), au moins un système de consolidation par jet d'eau et/ou au moins un dispositif de consolidation par jet d'air permettant de relier les zones d'extrémité (3, 3') des bandes partielles de matériau (2, 2') conçues de manière complémentaire l'une à l'autre et se chevauchant,
**caractérisé en ce**
**que** le dispositif (1) présente un système de fixation permettant de serrer les bandes partielles de matériau (2, 2'), le système de modification de zone d'extrémité présente au moins un système de découpe (110) comportant au moins un couteau rotatif (17, 17'), au moins un système de découpe par jet d'eau, un moyen de découpe par plasma et/ou au moins un système de découpe par faisceau laser, et le dispositif (1) présente au moins un système de pose par lequel les zones d'extrémité (3, 3') des bandes partielles de matériau (2, 2') conçues de manière complémentaire peuvent être disposées en se chevauchant, moyennant quoi les deux bandes partielles de matériau (2, 2') sont rapprochées l'une de l'autre dans la direction (B, B') au moyen des systèmes d'alimentation (9, 9') respectivement conçus comme un tapis de transport.

7. Dispositif (1) selon la revendication 6, **caractérisé en ce que** le système de liaison est prévu aux deux côtés des bandes partielles de matériau (2, 2').

8. Dispositif (1) selon au moins l'une des revendications 6 ou 7, **caractérisé en ce que** le système d'aiguilletage (50) présente au moins une cassette à aiguilles (5, 5') ronde avec des aiguilles disposées de manière décalée.

9. Dispositif (1) selon au moins l'une des revendications 6 à 8, **caractérisé en ce que** l'au moins un système d'alimentation (9, 9') présente au moins un dispositif de déroulement permettant le déroulement d'au moins la première bande partielle de matériau (2).

10. Dispositif (1) selon au moins l'une des revendications 6 à 9, **caractérisé en ce que** le dispositif (1) présente au moins un système de commande de position de bande, lequel permet d'alimenter les bandes partielles de matériau (2, 2') l'une à l'autre avec un positionnement et une vitesse précis.

11. Dispositif (1) selon au moins l'une des revendications 6 à 10, **caractérisé en ce que** le dispositif (1) présente au moins un capteur métallique (14) prévu sur ou dans la direction de transport de matériau après le système de liaison.
